# FASCICULE DE BREVET EUROPEEN

(11) **EP 2 363 017 B1**
(45) Date de publication et mention de la délivrance du brevet: **31.08.2016**
(21) Numéro de dépôt: 10306504.1
(22) Date de dépôt: 23.12.2010
(51) Int. Cl.: A01F 29/06

(54) **Dispositif broyeur de végétaux**
Häckselvorrichtung für Pflanzen
Vegetable grinding device

(30) Priorité: 24.12.2009 FR 0906348
(43) Date de publication de la demande: 07.09.2011
(73) Titulaire: Rabaud, 85110 Sainte-Cecile (FR)
(72) Inventeur: Rabaud, Claude, 85110, SAINTE-CECILE (FR); Rabaud, Dominique, 85600, SAINT-GEORGES DE MONTAIGU (FR); Godet, Laurent, 85700, LA MEILLERAIE-TILLAY (FR)
(74) Mandataire: Michelet, Alain

(56) Documents cités:
- DE-U1- 9 410 330
- DE-U1-202007 017 220
- US-A- 5 350 122
- US-A- 5 362 004
- US-A1- 2009 289 134

## Description

La présente invention concerne un dispositif pour broyer les végétaux tels que les branchages ou encore même certains troncs d'arbres de petit ou moyen diamètre.

On connaît par le document EP-1 066 883 un broyeur de végétaux comprenant une chambre de broyage avec entrée et sortie, qui est équipé d'un rotor dont la périphérie porte des outils de coupe et de défibrage/éclatement, associés à des moyens de ventilation qui sont positionnés de manière à définir le gabarit des fragments de matériaux tranchés.

D'autre part, le document US-5 362 004 décrit un broyeur dont le rotor comporte une pluralité de disques parallèles portés par un arbre d'entraînement central.
Ces disques, dont la périphérie constitue des moyens de calibrage pour les produits à broyer, sont solidarisés par des supports de couteaux et ils comportent dés orifices pour le passage d'une pluralité d'axes supports de fléaux pivotants.

La présente invention propose une autre solution technique visant à obtenir un broyeur de structure simple, robuste et efficace, apte à être polyvalent et dont les outils de coupe/broyage peuvent être facilement remplacés ou interchangés.

Pour cela, le broyeur de végétaux conforme à l'invention est du type comprenant une chambre de forme générale cylindrique intégrant des moyens de broyage, laquelle chambre est délimitée par deux côtés plans parallèles et par une volute cylindrique dans laquelle sont ménagées une ouverture d'entrée et une ouverture de sortie, et lesquels moyens de broyage consistent en un rotor, de forme générale cylindrique, comportant deux joues latérales solidaires d'un arbre central porté par lesdits côtés plans parallèles de ladite chambre, et associé à des moyens qui permettent son entraînement autour d'un axe de rotation, lequel rotor porte, en périphérie, des outils pour la découpe ou le broyage des végétaux ; en outre son rotor comporte une pluralité de couronnes de calibrage disposées parallèlement ou sensiblement parallèlement les unes aux autres et parallèlement auxdites joues latérales, régulièrement ou sensiblement régulièrement réparties entre ces dernières, la bordure extérieure desdites couronnes de calibrage définissant une enveloppe cylindrique virtuelle au-delà de laquelle s'étendent en saillie les parties actives desdits outils de découpe ou de broyage.
Et ce broyeur est caractérisé par le fait que les joues latérales du rotor sont reliées par des tôles de liaison qui s'étendent dans des plans perpendiculaires à celui desdites joues latérales. Ces tôles de liaison divisent le rotor en une pluralité de secteurs, lesdites couronnes de calibrage étant constituées chacune par une pluralité de tôles, disposées chacune dans l'un desdits secteurs de rotor, les différentes tôles de calibrage d'un même secteur de rotor comportant un orifice pour leur montage sur un axe support amovible reliant lesdites joues latérales, et les extrémités desdites tôles de calibrage venant en appui contre lesdites tôles de liaison.

Dans ce cadre, le rotor de broyage comporte avantageusement au moins deux ensembles de fléaux pivotants, diamétralement opposés par rapport à l'axe de rotation dudit rotor, chacun desdits ensembles comportant des fléaux disposés de part et d'autre de chaque tôle de calibrage.

Toujours dans ce cadre, les joues latérales du rotor de broyage comportent avantageusement des orifices coaxiaux aptes à recevoir un axe amovible décalé par rapport à l'axe qui supporte les fléaux, lequel axe amovible est apte à passer au travers d'orifices complémentaires ménagés dans lesdits fléaux, pour assurer leur verrouillage en position inactive.

Selon encore une autre particularité, certains au moins des outils du rotor de broyage se présentent sous la forme d'un couteau dont la bordure active s'étend parallèlement à l'axe de rotation dudit rotor, lequel couteau est porté par lesdites tôles de calibrage. De préférence, il est prévu au moins deux couteaux diamétralement opposés par rapport à l'axe de rotation du rotor.

Chacun de ces couteaux est avantageusement monté de manière amovible sur un porte-couteau solidaire des tôles de calibrage, ces dernières étant solidarisées les unes avec les autres par des pièces de liaison soudées, l'ensemble obtenu étant enfilé de manière amovible sur l'axe support associé.

De préférence, la face arrière de chaque couteau vient en appui sur un élément de butée du porte-couteau, la face arrière de ce porte-couteau étant elle-même en appui contre des éléments de butées ménagés sur les tôles de calibrage et sur les joues latérales du rotor.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue générale en perspective d'un dispositif broyeur conforme à l'invention ;
- la figure 2 est une vue isolée du rotor de broyage équipant le dispositif broyeur de la figure 1, ce rotor étant illustré en perspective, sans l'une de ses joues latérales pour bien comprendre sa structure ;
- la figure 3 est une vue de côté du rotor de broyage de la figure 2 ;
- la figure 4 montre le rotor de broyage des figures 2 et 3 dans une configuration dans laquelle certains de ses outils sont inactivés.

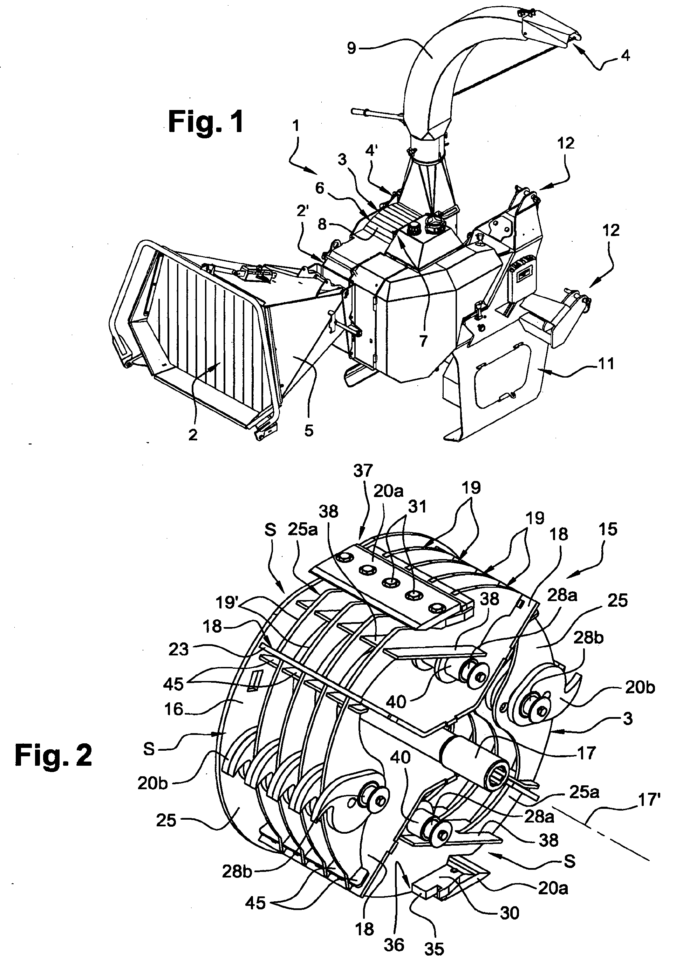

Le dispositif broyeur 1 illustré sur la figure 1 comprend une entrée 2 pour l'alimentation des matériaux à broyer (feuillages, branchages, troncs de petit ou moyen diamètre), une chambre de découpe/broyage 3 équipée d'un rotor (illustré isolément sur les figures 2 à 4), et une sortie 4 pour les végétaux découpés/broyés.

L'entrée 2 est ici équipée d'une goulotte 5 facilitant le guidage des végétaux.

La chambre de broyage 3 est délimitée par deux côtés parallèles 6 et 7 et par une volute cylindrique 8 dans laquelle sont ménagées une ouverture d'entrée 2', en correspondance avec l'entrée 2, et une ouverture de sortie 4', en correspondance avec la sortie 4.
La sortie 4 est ici équipée d'une goulotte d'évacuation orientable 9.

Une motorisation adaptée assure l'entraînement en rotation du rotor. Il peut s'agir d'une motorisation thermique ou électrique équipant spécifiquement le broyeur ; on peut aussi prévoir d'utiliser la motorisation d'un engin tracteur associé, par le biais de moyens de transmission adaptés.

Comme on peut le voir sur la figure 1, l'ensemble est porté par un châssis 11 équipé d'un dispositif 12 pour l'attelage à un véhicule tracteur.

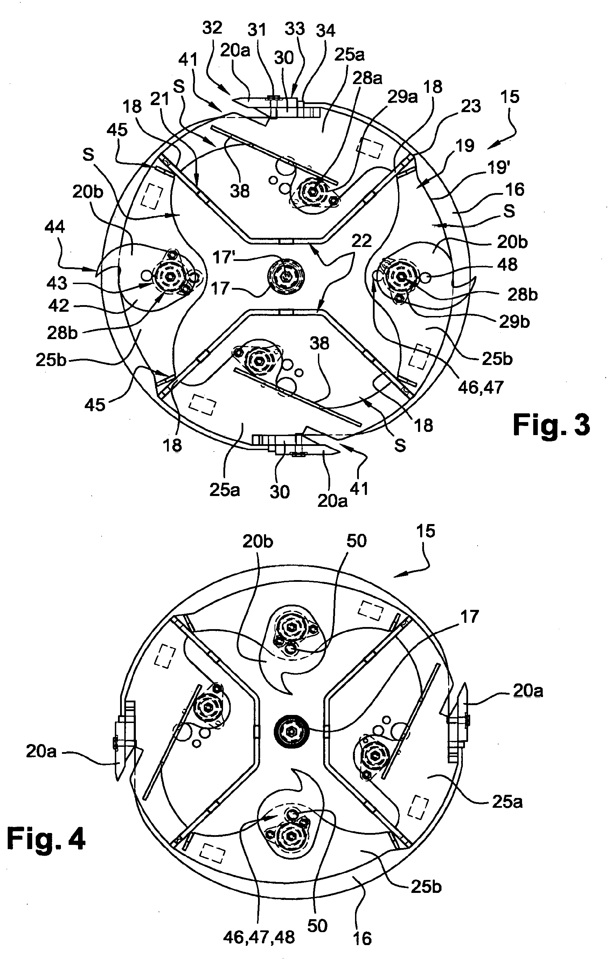

Le rotor de broyage intégré dans la chambre 3 est détaillé sur les figures 2 et 3.

Ce rotor 15, de forme générale cylindrique, est constitué de deux joues latérales 16 (dont l'une seule est visible sur les figures 2 et 3) reliées par un arbre central 17, d'axe 17', et par des tôles de liaison 18.
Il comporte en outre une pluralité de couronnes 19 servant d'organes de calibrage pour les matériaux traités. Ces couronnes 19 s'étendent sur tout le périmètre de la périphérie du rotor 15 ; elles sont parallèles entre elles et par rapport aux joues latérales 16. Leur bordure extérieure 19' délimite une enveloppe cylindrique au-delà de laquelle s'étendent en saillie les parties actives d'outils 20 aptes à assurer le traitement des végétaux (découpe ou broyage).

L'arbre 17 est centré sur l'axe de rotation 17' du rotor 15 et il sert à l'entraîner en rotation ; cet arbre 17 est monté sur des paliers solidaires des côtés plans 6 et 7 de la chambre de broyage 3 et l'une de ses extrémités comporte des moyens pour assurer sa liaison mécanique avec la motorisation associée.

Les tôles de liaison 18 s'étendent radialement, dans des plans qui sont de préférence perpendiculaires à celui des joues latérales 16 et qui sont parallèles à l'arbre d'entraînement 17. Ces tôles 18 divisent le rotor 15 en une pluralité de secteurs S au sein desquels est agencé un moyen de découpe ou de broyage 20.

Les secteurs S en question sont en nombre pair pour assurer l'équilibre du rotor ; en l'occurrence ils sont au nombre de quatre s'étendant chacun sur un secteur angulaire de 90°.

Les quatre tôles 18 sont en fait solidaires deux à deux ; elles sont formées par les ailes latérales de pièces monoblocs 21 en forme générale de V.
Comme on peut le voir sur la figure 3, les deux bases 22 des pièces en V 21 sont parallèles entre elles et elles s'étendent à proximité de l'arbre 17, de part et d'autre de celui-ci.

La bordure extérieure 23 des tôles de liaison 18 s'étend jusqu'à la bordure extérieure 19' des couronnes de calibrage 19, ou se situe en léger retrait de cette bordure extérieure 19'.

Ces couronnes de calibrage 19 sont ici au nombre de quatre, sensiblement régulièrement réparties entre les joues latérales 16. Elles sont chacune constituées par une pluralité de tôles 25 (en l'occurrence quatre) disposées chacune dans l'un des différents secteurs de rotor S.

Sur chaque couronne 19, les tôles constitutives 25 peuvent ne pas être situées exactement dans le prolongement les unes des autres.

Dans chaque secteur de rotor S, les tôles de calibrage 25 sont montées sur un axe amovible 28 par l'intermédiaire d'un orifice 29 ; et les deux extrémités de ces tôles 25 viennent en simple appui contre les tôles de liaison 18.

De plus, les différentes tôles de calibrage 25 d'un même secteur S sont solidarisées entre elles par des moyens entretoises détaillés plus loin, permettant de rigidifier la structure et de maintenir leur écartement.

Tel qu'illustré sur les figures 2 et 3, le rotor 15 comporte ici deux types d'outils, à savoir deux couteaux 20a diamétralement opposés, placés chacun dans l'un des secteurs de rotors S, et deux ensembles de fléaux 20b, diamétralement opposés, placés chacun également dans l'un des secteurs de rotors S.

Chaque couteau 20a est monté sur la périphérie des tôles de calibrage 25a du secteur de rotor S correspondant, par l'intermédiaire d'un porte-couteau 30. Ce montage est réalisé au moyen de vis 31 pour présenter un caractère amovible. La bordure active 32 de chaque couteau 20a s'étend sur toute ou pratiquement toute la largeur du rotor 15, parallèlement à l'arbre de rotation 17, et leur face arrière 33 vient en appui contre un élément de butée 34 du porte-couteau 30 associé, pour éviter de faire supporter les efforts de découpe aux vis de fixation 31.

Le porte-couteau 30 s'étend lui-même sur toute ou pratiquement toute la largeur du rotor 15 et sa bordure arrière 35 vient en appui contre des éléments de butées 36, 37, ménagés respectivement sur les tôles de calibrage associées 25a et sur les joues latérales 16, toujours pour éviter de faire supporter les efforts de découpe aux vis de fixation 31.

Les porte-couteaux 30 sont solidarisés par soudage sur les tôles de calibrage 25a.
De plus, comme indiqué ci-dessus, ces tôles 25a sont solidarisées entre elles par des entretoises 38 soudées qui peuvent être indépendantes les unes des autres, ou faire partie intégrante d'une pièce en forme générale de peigne.
Ces tôles 25a sont également solidarisées entre elles par un tube soudé 40 passant au travers de leurs orifices 29, et dans lequel est enfilé l'axe support amovible associé 28a. La bordure extérieure des entretoises 38 ne s'étend pas jusqu'à la bordure extérieure 19' des couronnes de calibrage 19.

Au sein de chaque secteur de rotor S concerné, les entretoises 38 sont placées dans un même plan qui est incliné par rapport à un plan radial, de manière adaptée pour orienter convenablement les matériaux découpés vers la tôle de liaison 18 située juste en aval (par rapport au sens de rotation du rotor 15), de manière à optimiser l'évacuation de ces matériaux.

Sur la figure 3, on remarque les échancrures 41, ménagées dans les tôles de calibrage 25a, en regard de la bordure active 32 des couteaux 20a, adaptées pour dégager le copeau de matière formé en face desdites tôles 25a lors de la découpe.

De leur côté, les ensembles de fléaux 20b sont montés libres en rotation sur l'axe 28b qui porte les tôles de calibrage associées 25b.
Chacun des fléaux 20b comporte un corps 42 dans lequel est ménagé un orifice 43 pour le passage de l'axe support 28b, lequel corps 42 est prolongé par une pointe ou crochet 44 faisant office d'outil de broyage proprement dit.

Un ou deux fléaux 20b (voire plus) sont disposés de part et d'autre de chaque tôle de calibrage 25b.
On peut prévoir de décaler légèrement latéralement les fléaux 20b (et les tôles de calibrage 25b) d'un ensemble, par rapport à l'ensemble diamétralement opposé, pour optimiser le travail sur la matière végétale.

Sur les figures 2 et 3, on remarque que les tôles de calibrage 25b sont solidarisées entre elles par deux jeux d'entretoises soudées 45. Les entretoises 45 d'un même jeu sont avantageusement réalisées monoblocs et se présentent sous la forme d'un peigne venant s'encastrer, avant soudage, au niveau de chaque extrémité des tôles 25b (les bordures d'extrémités de ces tôles 25b restent tout de même libres pour venir en appui contre les tôles de liaison 18 en regard).
Dans une variante de réalisation, l'un des deux jeux d'entretoises 45 (ou les deux) peut être remplacé par des encoches de blocage ménagées dans les tôles 18.

D'autre part, les joues latérales 16 et les tôles de calibrage 25b comportent des orifices coaxiaux 46, 47, légèrement décalés par rapport à l'axe 28b (côté arbre central 17), et le corps 42 des fléaux 20b comporte un orifice 48 qui a la possibilité de se positionner coaxialement aux orifices 46, 47 précités, en vue de recevoir un axe amovible complémentaire (visible sur la figure 4 - repéré 50), fixé sur les joues latérales 16, pour assurer le verrouillage desdits fléaux 20b en position inactive, c'est-à-dire dans une position où leur crochet de broyage 44 est escamoté dans l'encombrement du cylindre virtuel défini par la bordure extérieure 19' des couronnes de calibrage 19.

Sur les figures 2 et 3, les fléaux 20b sont en rotation libre autour de l'axe 28b et ils assurent donc leur fonction de broyage des végétaux (les crochets 44 des fléaux 20b font saillie au-delà du cylindre virtuel défini par la bordure extérieure 19' des couronnes de calibrage 19, tout comme la bordure active 32 des couteaux 20a).
En revanche, leur position verrouillée inactive précitée est illustrée sur la figure 4, l'axe complémentaire rapporté 50 traversant les orifices 46, 47 et 48, correctement alignés. Cet axe rapporté 50 empêche donc la rotation des fléaux 20b et il les maintient dans une position dans laquelle ils ne peuvent avoir aucune action sur les végétaux.

On comprend qu'une telle particularité permet de transformer un rotor 15 équipé de couteaux 20a et de fléaux 20b en un simple rotor à couteaux, ceci sans nécessiter le démontage des fléaux 20b.

Dans le cadre d'un rotor 15 qui serait équipé de plusieurs paires d'ensembles de fléaux 20b diamétralement opposés, de tels moyens de verrouillage 48, 50 permettent d'inactiver une ou plusieurs de ces paires d'ensembles de fléaux.

Ensuite, en cas de besoin, la réactivation des fléaux 20b verrouillés s'effectue de manière très simple en enlevant l'axe 50 correspondant.

Pour leur fixation, les axes de verrouillage 50 comportent avantageusement une tête formant butée, d'un côté, et un système de blocage, de type vis-écrou, de l'autre côté, venant tous deux prendre appui contre la face externe des joues latérales 16 du rotor 15.

Au niveau de chaque secteur S du rotor 15, les joues latérales 16 sont munies d'orifices 29a, 29b assurant le positionnement, soit d'un axe amovible 28a pour la réception de tôles de calibrage 25a avec couteau 20a, soit d'un axe amovible 28b pour la réception de tôles de calibrage 25b avec fléaux 20b.
Dans le mode de réalisation illustré, les orifices correspondants 29a et 29b sont distincts et chaque secteur de rotor S comporte les deux types d'orifices (avec également des orifices complémentaires 46, 47 pour la réception éventuelle d'un axe 50 de verrouillage des fléaux 20b).

On obtient ainsi un rotor 15 de structure simple et résistante, configurable à volonté, comportant uniquement des couteaux 20a (une ou deux paires), uniquement des fléaux 20b (une ou deux paires d'ensembles), ou comportant une paire de couteaux 20a et une paire d'ensembles de fléaux 20b (rotor mixte tel qu'illustré sur les figures 2 et 3).
Si les couteaux 20a ne sont pas nécessaires, on les enlève avec les tôles de calibrage associées 25a, et on remplace cet ensemble par un autre ensemble comportant uniquement des tôles de calibrage 25a (sans couteau 20a) ; les fléaux 20b peuvent de leur côté soit être enlevés, soit être verrouillés en position inactive.

Bien entendu, d'une manière générale, les moyens de coupe 20 peuvent être prévus simplement au nombre de deux, diamétralement opposés, ou encore en nombre supérieur à quatre (par exemple six ou huit).

## Revendications

1. Dispositif broyeur de végétaux comprenant une chambre (3) de forme générale cylindrique intégrant des moyens de broyage (15), laquelle chambre (3) est délimitée par deux côtés plans parallèles (6, 7) et par une volute cylindrique (8) dans laquelle sont ménagées une ouverture d'entrée (2') et une ouverture de sortie (4'), et lesquels moyens de broyage consistent en un rotor (15), de forme générale cylindrique, comportant deux joues latérales (16) solidaires d'un arbre central (17) porté par lesdits côtés plans parallèles (6, 7) de ladite chambre (3), et associé à des moyens qui permettent son entraînement autour d'un axe de rotation (17'), lequel rotor (15) porte, en périphérie, des outils (20) pour la découpe ou le broyage des végétaux, et lequel rotor (15) comporte une pluralité de couronnes de calibrage (19), disposées parallèlement ou sensiblement parallèlement les unes aux autres et parallèlement auxdites joues latérales (16), régulièrement ou sensiblement régulièrement réparties entre ces dernières, la bordure extérieure (19') desdites couronnes de calibrage (19) définissant une enveloppe cylindrique virtuelle au-delà de laquelle s'étendent en saillie les parties actives (32, 44) desdits outils de découpe ou de broyage (20), **caractérisé en ce que** lesdites joues latérales (16) du rotor (15) sont reliées par des tôles de liaison (18) qui s'étendent dans des plans perpendiculaires à celui desdites joues latérales (16), lesquelles tôles de liaison (18) divisent le rotor (15) en une pluralité de secteurs (S), lesdites couronnes de calibrage (19) étant constituées chacune par une pluralité de tôles (25), disposées chacune dans l'un desdits secteurs de rotor (S), les différentes tôles de calibrage (25) d'un même secteur de rotor (S) comportant un orifice (29) pour leur montage sur un axe support amovible (28) reliant lesdites joues latérales (16), et les extrémités desdites tôles de calibrage (25) venant en appui contre lesdites tôles de liaison (18).

2. Dispositif broyeur selon la revendication 1, **caractérisé en ce que** les tôles de liaison (18) des joues latérales (16) du rotor (15) s'étendent radialement, formées par les ailes latérales de pièces monoblocs (21) en forme générale de V.

3. Dispositif broyeur selon l'une quelconque des revendications 1 ou 2, **caractérisé en ce que** certains au moins des outils de son rotor de broyage (15) consistent en des fléaux (20b) montés libres en rotation sur l'axe (28b) support desdites tôles de calibrage (25b).

4. Dispositif broyeur selon la revendication 3, **caractérisé en ce que** son rotor de broyage (15) comporte au moins deux ensembles de fléaux pivotants (20b), diamétralement opposés par rapport à l'axe de rotation (17') dudit rotor (15), chacun desdits ensembles comportant des fléaux (20b) disposés de part et d'autre de chaque tôle de calibrage (25b).

5. Dispositif broyeur selon l'une quelconque des revendications 3 ou 4, **caractérisé en ce que** les joues latérales (16) du rotor de broyage (15) comportent des orifices coaxiaux (46) aptes à recevoir un axe amovible (50) décalé par rapport à l'axe (28b) qui supporte les fléaux (20b), lequel axe amovible (50) est apte à passer au travers d'orifices complémentaires (48) ménagés dans lesdits fléaux (20b), pour assurer leur verrouillage en position inactive.

6. Dispositif broyeur selon l'une quelconque des revendications 1 à 5, **caractérisé en ce que** certains au moins des outils de son rotor de broyage (15) se présentent sous la forme d'un couteau (20a) dont la bordure active (32) s'étend parallèlement à l'axe de rotation (17') dudit rotor (15), lequel couteau (20a) est porté par lesdites tôles de calibrage (25a).

7. Dispositif broyeur selon la revendication 6, **caractérisé en ce qu'**il comporte au moins deux couteaux (20a) diamétralement opposés par rapport à l'axe (17') de rotation du rotor (15).

8. Dispositif broyeur selon l'une quelconque des revendications 6 ou 7, **caractérisé en ce que** chaque couteau (20a) est monté de manière amovible sur un porte-couteau (30) solidaire desdites tôles de calibrage (25a), ces dernières étant solidarisées les unes avec les autres par des pièces de liaison soudées (38), l'ensemble obtenu étant enfilé de manière amovible sur ledit axe support associé (28a).

9. Dispositif broyeur selon la revendication 8, **caractérisé en ce que** la face arrière de chaque couteau (20a) vient en appui sur un élément de butée (34) du porte-couteau (30), la face arrière (35) dudit porte-couteau (30) étant elle-même en appui contre des éléments de butées (36, 37) ménagés sur les tôles de calibrage (25a) et sur les joues latérales (16) du rotor (15).

## Patentansprüche

1. Häckselvorrichtung für Pflanzen mit einer Kammer (3) von im Wesentlichen zylindrischer Form, in der sich Häckselmittel befinden, wobei die besagte Kammer (3) durch zwei parallele ebene Seiten (6, 7) und eine zylindrische Wölbung (8), in der eine Eingangsöffnung (2') und eine Ausgangsöffnung (4') vorgesehen sind, begrenzt ist und wobei die Häckselmittel aus einem Rotor (15) von im Wesentlichen zylindrischer Form bestehen, der zwei seitliche, mit einer zentralen, von den besagten parallelen ebenen Seiten (6, 7) der besagten Kammer (3) getragenen Welle (17) fest verbundene Wangen (16) aufweist und der mit Mitteln verbunden ist, die dessen Antrieb um eine Drehachse (17') ermöglichen, wobei der Rotor (15) an seinem Umfang Werkzeuge (20) zum Zerschneiden und Häckseln der Pflanzen aufweist und wobei der Rotor (15) eine Mehrzahl von Kalibrierkränzen (19) aufweist, die parallel oder im Wesentlichen parallel zueinander und parallel zu den seitlichen Wangen (16) angeordnet und zwischen letzteren gleichmäßig oder im Wesentlichen gleichmäßig verteilt sind, wobei der äußere Rand (19') der Kalibrierkränze (19) eine virtuelle zylindrische Hülle bildet, außerhalb derer sich die aktiven Teile (32, 34) der Werkzeuge zum Zerschneiden und Häckseln (20) hervorstehend erstrecken, **dadurch gekennzeichnet, daß** die seitlichen Wangen (16) des Rotors (15) durch Verbindungsbleche (18) verbunden sind, die sich in zur Ebene der seitlichen Wangen (16) senkrechten Wangen erstrecken, wobei die Verbindungsbleche (18) den Rotor (15) in eine Mehrzahl von Sektoren (S) unterteilen, wobei jeder der Kalibrierkränze (19) aus einer Mehrzahl von Blechen (25) gebildet ist, von denen jedes in einem der Sektoren (S) des Rotors angeordnet ist, wobei die verschiedenen Kalibrierbleche (25) ein und desselben Sektors (S) eine Öffnung (29) für deren Montage auf einer abnehmbaren, die seitlichen Wangen (16) verbindenden Stützachse (28) aufweisen, und die Enden der Kalibrierbleche (25) an den Verbindungsblechen (18) zur Anlage kommen.

2. Häckselvorrichtung gemäß Anspruch 1, **dadurch gekennzeichnet, daß** sich die Verbindungsbleche (18) der seitlichen Wangen (16) des Rotors (15), durch die seitlichen Flügel einstückiger, im Wesentlichen V-förmiger Teile (21) gebildet, radial erstrecken.

3. Häckselvorrichtung gemäß einem der Ansprüche 1 oder 2, **dadurch gekennzeichnet, daß** wenigstens einige der Werkzeuge von deren Häckselrotor (15) aus auf der Stützachse (28b) der Kalibrierbleche (25b) frei drehbar montierten Flegeln (20b) bestehen.

4. Häckselvorrichtung gemäß Anspruch 3, **dadurch gekennzeichnet, daß** deren Häckselrotor (15) wenigstens zwei Anordnungen von drehbaren Flegeln (20b) aufweist, die in Bezug auf die Drehachse (17') des Rotors (15) diametral gegenüberliegend angeordnet sind, wobei jede der Anordnungen Flegel (20b) aufweist, die beiderseits jedes Kalibrierblechs (25b) angeordnet sind.

5. Häckselvorrichtung gemäß einem der Ansprüche 3 oder 4, **dadurch gekennzeichnet, daß** die seitlichen Wangen (16) des Häckselrotors (15) koaxiale Öffnungen (46) aufweisen, die geeignet sind, eine gegenüber der Achse (28b), die die Flegel (20b) trägt, abnehmbare Achse (50) auszunehmen, wobei die abnehmbare Achse (50) geeignet ist, durch die in den Flegeln (20b) eingerichteten zusätzlichen Öffnungen (48) hindurchzuführen, um deren Versiegelung in der inaktiven Position sicherzustellen.

6. Häckselvorrichtung gemäß einem der Ansprüche 1 bis 5, **dadurch gekennzeichnet, daß** wenigstens einige der Werkzeuge von deren Häckselrotor (15) in Form eines Messers (20a) ausgebildet sind, deren aktive Kante (32) sich zur Drehachse (17') des Rotors (15) parallel erstreckt, wobei das Messer (20a) von den Kalibrierblechen (25a) getragen ist.

7. Häckselvorrichtung gemäß Anspruch 6, **dadurch gekennzeichnet, daß** sie wenigstens zwei in Bezug auf die Drehachse (17') des Rotors (15) diametral gegenüberliegende Messer (20a) aufweist.

8. Häckselvorrichtung gemäß einem der Ansprüche 6 oder 7, **dadurch gekennzeichnet, daß** jedes Messer (20a) abnehmbar an einem Messerhalter (30) befestigt ist, der mit den Kalibrierblechen (25a) fest verbunden ist, wobei letztere untereinander durch angeschweißte Verbindungsstücke (38) miteinander verbunden sind, wobei die erhaltene Gesamtheit in abnehmbarer Weise auf der besagten zugehörigen Stützachse (28a) aufgereiht ist.

9. Häckselvorrichtung gemäß Anspruch 8, **dadurch gekennzeichnet, daß** sich die Rückseite jedes Messers (20a) an einem Anschlagselement (34) des Messerhalters (30) abstützt, wobei sich die Rückseite (35) des Messerhalters (30) selbst an auf den Kalibrierblechen (25a) und an den seitlichen Wangen (16) des Rotors (15) eingerichteten Anschlagelementen (36, 37) abstützt.

## Claims

1. A vegetable grinding device comprising a chamber (3) generally cylindrical in shape, integrating grinding means (15), wherein the chamber (3) is delimited by two parallel planar sides (6, 7) and by a cylindrical volute (8) in which are arranged an inlet opening (2') and an outlet opening (4'), and wherein the grinding means consist in a rotor (15), generally cylindrical in shape, including two lateral flanges (16) integral with a central shaft (17) carried by said parallel planar sides (6, 7) of said chamber (3), and associated with means that allow the driving thereof about an axis of rotation (17'), said rotor (15) carries, at the periphery thereof, tools (20) for cutting or grinding vegetables, and wherein the rotor (15) includes a plurality of calibration crowns (19), arranged parallel or substantially parallel to each other and parallel to said lateral flanges (16), regularly or substantially regularly distributed between these latter, the external edge (19') of said calibration crowns (19) defining a virtual cylindrical envelop beyond which protrude the active parts (32, 44) of said cutting or grinding tools (20), **characterized in that** said lateral flanges (16) of the rotor (15) are linked by linking sheets (18) that extend in planes perpendicular to that of said lateral flanges (16), wherein the linking sheets (18) divide the rotor (15) into a plurality of sectors (S), said calibration crowns (19) being each consisted by a plurality of sheets (25), each arranged in one of said rotor sectors (S), the different calibration sheets (25) of a same rotor sector (S) including an orifice (29) for the mounting thereof on a removable support axle (28) linking said lateral flanges (16), and the ends of said calibration sheets (25) coming to rest against said linking sheets (18).

2. The grinding device according to claim 1, **characterized in that** the linking sheets (18) of the lateral flanges (16) of the rotor (15) extend radially, formed by the lateral wings of generally V-shaped single-piece parts (21).

3. The grinding device according to any one of claims 1 or 2, **characterized in that** some at least of the tools of its grinding rotor (15) consist in beams (20b) mounted free in rotation on the support axle (28b) of said calibration sheets (25b).

4. The grinding device according to claim 3, **characterized in that** its grinding rotor (15) includes at least two sets of pivoting beams (20b), diametrically opposed with respect to the axis of rotation (17') of said rotor (15), each of said sets including beams (20b) arranged on either side of each calibration sheet (25b).

5. The grinding device according to any one of claims 3 or 4, **characterized in that** the lateral flanges (16) of the grinding rotor (15) include coaxial orifices (46) adapted to receive a removable axle (50) offset with respect to the axle (28b) that supports the beams (20b), wherein the removable axle (50) is adapted to pass through complementary orifices (48) formed in said beams (20b), to ensure the locking thereof in inactive position.

6. The grinding device according to any one of claims 1 to 5, **characterized in that** some at least of the tools of its grinding rotor (15) are in the form of a knife (20a) whose active edge (32) extends parallel to the axis of rotation (17') of said rotor (15), which knife (20a) is carried by said calibration sheets (25a).

7. The grinding device according to claim 6, **characterized in that** it includes at least two knives (20a) diametrically opposed with respect to the axis of rotation (17') of the rotor (15).

8. The grinding device according to any one of claims 6 or 7, **characterized in that** each knife (20a) is removably mounted on a knife-holder (30) integral with said calibration sheets (25a), these latter being made integral with each other by welded linking parts (38), the obtained unit being removably threaded onto said associated support axle (28a).

9. The grinding device according to claim 8, **characterized in that** the rear face of each knife (20a) comes to rest on a stop element (34) of the knife-holder (30), the rear face (35) of said knife-holder (30) being itself in rest against stop elements (36, 37) formed on the calibration sheets (25a) and on the lateral flanges (16) of the rotor (15).
